# EUROPEAN PATENT SPECIFICATION

(11) **EP 3 853 498 B1**
(45) Date of publication and mention of the grant of the patent: **20.12.2023**
(21) Application number: 18779576.0
(22) Date of filing: 18.09.2018
(51) Int. Cl.: F16G 1/06, H02K 41/03

(54) **DRIVE SYSTEM**
ANTRIEBSSYSTEM
SYSTÈME D'ENTRAÎNEMENT

(43) Date of publication of application: 28.07.2021
(73) Proprietor: ContiTech Antriebssysteme GmbH, 30165 Hannover (DE); Target Robotics S.A. De C.V., San Luis Potosi, 78440 (MX)
(72) Inventor: STEER, Peter, 30419 Hannover (DE); FRANKE, Martin, 30419 Hannover (DE); ROSENBOHM, Svenja, 30419 Hannover (DE); JIMENEZ SANCHEZ, Gerardo Daniel, San Luis Potosi, 78216 (MX); VILLALON BALTAZAR, Jose Luis, San Luis Potosi, 78295 (MX); VIDELA, Carlos Sebastian, San Luis Potosi, 78438 (MX)
(74) Representative: Meissner Bolte Partnerschaft mbB
(86) International application number: PCT/EP2018/075120
(87) International publication number: WO 2020/057723

(56) References cited:
- WO-A1-2008/148273
- GB-A- 2 142 706
- US-A- 3 273 001
- US-A- 5 172 803
- US-A1- 2006 081 446

## Description

The present invention relates to a drive system.

Rotatory servo controlled drive systems which move a belt by gears or sprockets are known from the prior art, see for example US 2006/081446 A1. Here, the belt may be in each case partially looped around a freely sprocket and around a pulley sprocket that can be driven by the rotatory servo controlled drive system.

A disadvantage here is that, the rotatory servo controlled drive system requires a transmission mechanism to move the driveable belt pulley and an intense mechanical frictional contact is required between gears, sprockets or the belt pulley and belt for the purposes of transmitting power. The mass of this mechanism and the intense of this mechanical friction limit the acceleration and deceleration rates, therefore the number of index per second capability. It also gives rise to wear of the belt and of the belt pulley.

It is an object of the present invention to provide a servo controlled linear movement drive system which exhibits high speed rates of indexing, accuracy, high performance for acceleration and deceleration and little wear.

The stated object is achieved according to the invention by a drive system with the features of patent claim 1. Advantageous embodiments are described in the dependent claims.

The invention thus relates to a drive system, which has a drive apparatus, a belt and a control unit for controlling the drive apparatus. The control unit may comprise a servo control sub-unit or forms a servo control sub-unit. Thus, a movement resulting from a control of the drive apparatus is preferably a linear movement. The drive system may therefore also be referred to as a servo controlled linear movement drive system. However, in particular for the sake of compactness, the term drive system is used in the following.

The drive system is designed to perform a linear relative movement between the drive apparatus and a belt drive section of the belt in a reference direction. The drive apparatus has multiple electromagnetic coils. The electromagnetic coils are arranged one behind the other in the reference direction. The belt has a base material. The base material may be formed from rubber material or polyurethane. The belt has multiple permanent magnets. The permanent magnets are embedded into the base material of the belt drive section one behind the other in the reference direction. The permanent magnets may be embedded into the base material of the belt drive section to be spaced apart from one another. The control unit is coupled to the coils of the drive apparatus, such that a common drive electromagnetic field can be generated by means of the coils. The common drive electromagnetic field may also be referred as the drive electromagnetic field. The drive apparatus and the belt drive section are arranged relative to one another such that the drive electromagnetic field that can be generated by the coils acts on the permanent magnets. The control unit is designed to activate the coils so as to displace the drive electromagnetic field in the reference direction, such that a drive force is generated which acts on the drive apparatus and on the belt in the reference direction, or opposite to the reference direction. This effects the relative movement.

The drive system preferably provides the advantageous capacity to accelerate or decelerate because of the reduction or elimination of the mass in the mechanical components to transmit the movement. This acceleration-deceleration capacity becomes in a helpful technical effect when performing high speed indexing while keeping positional accuracy. For instance, the drive system may be configured to start driving the belt, accelerate it to high speed, decelerate it and stop it in a programmed position, in particular with high accuracy, for instance from 200 to more than 1000 cycles per minute.

Furthermore, the drive system overcomes the otherwise typically required mechanisms to convert the rotary movement into linear movement by gears or other mechanical methods, which often generate high friction and have limits to develop high performance acceleration/deceleration. The inventive drive system, however, overcomes these drawbacks.

The permanent magnet may have and/or be formed from magnetically hard material and/or magnetically soft material. As a hard magnet, the permanent magnet may for example be formed from a magnetically hard material, for example from an alloy composed of iron, cobalt, nickel and/or ferrites. The permanent magnet may however also be formed by a magnetized, magnetically soft material, in particular with a ferrite. By means of the drive electromagnetic field which is generated by the coils, acts on the permanent magnets and is displaceable in the reference direction, the relative movement between the drive apparatus and the belt drive section can be effected without mechanical contact between the drive apparatus and the belt drive section being necessary for the transmission of force from the drive apparatus to the belt drive section. The electromagnetic field generated by the coils may also be referred to as the magnetic field.

The drive apparatus preferably provides the energy for effecting the relative movement. The drive apparatus may also be referred to or designed as a drive linear servo motor. The drive apparatus may also be referred to as first drive apparatus.

The coils of the drive apparatus may be electrically energized such that the desired drive electromagnetic field is generated. The coils may also be referred to as first coils.

The belt may, for example, be designed as a drive belt or as a transport belt for conveying bulk material and/or piece goods. The belt may be designed for a vertical or horizontal movement. The belt may be of ring-shaped design. The ring-shaped belt may also be referred to as an endless belt, because it is of encircling design. The belt may however also be formed with a finite length. This belt is also referred to as a finite belt. The belt also has strengthening members in addition to the permanent magnets and the base material. The at least one strengthening member is embedded into the base material or arranged outside the base material. Mechanical reinforcement of the belt can be provided in this way. The belt may also be referred to as first belt.

The base material is particularly preferably formed from polyurethane (PU). It is however also possible for the base material to be at least based on polyurethane. The base material may thus be composed of multiple materials, wherein one of these materials is polyurethane. The base material may also be formed from rubber material. This is however not imperatively necessary. The base material may be based at least on rubber material. The base material may thus be composed of multiple materials, wherein one of these materials is rubber material. The base material preferably exhibits high permeability to magnetic fields. The base material may also be referred to as first base material.

The fact that the permanent magnets are embedded in the base material preferably has the effect that the permanent magnets are fastened in an encompassed manner in the belt, which leads to a good transmission of force from the permanent magnets to the base material, in particular in the reference direction. The embedding of the permanent magnets into the base material permits a direct or indirect fastening of the permanent magnets to and/or in the base material. The permanent magnets may also be referred to as first permanent magnets.

The control unit may comprise a processing unit and a power unit, wherein the power unit is coupled directly to the coils by means of cables. The power unit can be controlled by means of control commands from the processing unit. The control unit may also be referred to as first control unit.

The relative movement between the drive apparatus and the belt drive section may preferably mean that the drive apparatus moves and the belt drive section is positionally fixed, or that the drive apparatus is positionally fixed and the belt drive section moves with the belt.

The drive apparatus and the belt are preferably arranged so the contact with one another has low or no friction. The drive apparatus and the belt may form a low friction and/or contactless drive. In this way, a particularly low level of wear of the belt can be made possible. Provision is preferably made for the drive system to be designed such that the drive apparatus can be freely positioned relative to the belt. The arrangement of the drive apparatus is preferably in particular not dependent on a position and/or arrangement of a pulley, for example of a pulley-belt drive assembly. The relative movement may also be referred to as first relative movement.

The common drive magnetic field preferably results from superposed magnetic fields that can be respectively generated by the electromagnetic coils. The drive magnetic field is preferably characterized by a maximum intensity, for example by a maximum magnetic field strength or a maximum magnetic flux density. A displacement of the magnetic field can thus be understood to mean a displacement of the maximum intensity. The permanent magnets encompassed by the common drive magnetic field preferably orient themselves centrally with respect to the maximum intensity. As the maximum intensity is displaced, the permanent magnets seek to follow the maximum intensity, which leads to the drive force. The common drive magnetic field may also be referred to as first common drive magnetic field.

According to claim 1 the drive system is characterized in that the drive apparatus and the belt drive section are arranged relative to one another such that the drive electromagnetic field that can be generated by the coils acts on at least two of the permanent magnets. For example, the drive electromagnetic field may act on at least two, three, four, five or six permanent magnets. In particular by means of an increase of the number of permanent magnets on which the drive electromagnetic field acts, a higher force can be transmitted from the drive apparatus to the belt drive section. Furthermore, the force can be introduced in a distributed manner into the drive belt section. This permits a linear relative movement of the drive belt section in the reference direction.

An advantageous embodiment of the drive system is characterized in that the control unit is designed to activate the coils such that the coils are electrically energized in the reference direction, in particular succession, such that the drive electromagnetic field is displaced in the reference direction. A simple displacement of the drive electromagnetic field is provided in this way. For example, the coils may be electrically energized individually in succession in the reference direction. In this way, a locally limited drive magnetic field is provided. This is however not imperatively necessary. The coils may also be electrically energized in each case in groups of multiple coils, in particular of two, three or four coils, in succession in the reference direction. In this way, a spatially larger drive electromagnetic field can be provided. Here, each coil may, in each case, be part of a group of coils. This is however not imperatively necessary. Each coil may also, in each case, be part of multiple groups, for example two, three or four groups.

For example, a first coil, a second coil and a third coil may be provided, which are arranged in succession along the reference direction. Here, it is for example possible for firstly the first coil, then the second coil and finally the third coil to be electrically energized. In this case, none of the first, second and third coils is part of a group of coils. This is however not imperatively necessary. It is also possible for firstly the first coil and the second coil simultaneously, and subsequently the second coil and the third coil, to be electrically energized. Here, the first and second coils form, for example, a first group of coils, and the second and third coils form a second group of coils. In this case, therefore, the second coil is both part of the first group and part of the second group.

In a further advantageous embodiment, the drive apparatus has for example the first coil, the second coil, the third coil and a fourth coil, which are arranged in succession along the reference direction. Here, it is for example possible for firstly the first coil, then the second coil, then the third coil and finally the fourth coil to be electrically energized. In this case, none of the first, second, third and fourth coils is part of a group of coils. This is however not imperatively necessary. It is also possible for firstly the first coil and the second coil simultaneously, and subsequently the third coil and the fourth coil, to be electrically energized. Here, the first and second coils form, for example, a first group of coils, and the third and fourth coils form a second group of coils. In this case, therefore, each of the first, second, third and fourth coils is part of only one group, and none of the first, second, third and fourth coils is part of two groups. By virtue of the fact that the coils can be electrically energized individually in succession in the reference direction, or else in each case in groups of multiple coils in the reference direction, an adaptation of the drive system to the configuration of the belt and of the belt guide system is made possible. For the desired action, it is advantageous if the coils are electrically energized in the reference direction such that the drive magnetic field is displaced in the reference direction.

If multiple coils form a group of coils, the coils of a group can in each case be electrically energized with currents of different magnitude. In this way, the drive magnetic field, in particular the spatial distribution of the drive magnetic field can be determined. For example, it is possible for the spatial arrangement of the maximum intensity and/or of the maximum magnetic field strength and/or of the maximum magnetic flux density to be determined. In this way, the common drive electromagnetic field can be displaced with simultaneous electrical energization of multiple coils in the reference direction. In this way, a particularly precise displacement of the common drive electromagnetic field, and thus a particularly precise transmission of force from the drive apparatus to the belt drive section can be made possible. This permits a particularly uniform relative movement.

Provision is furthermore preferably made for the coils to be electrically energized in a manner dependent on a position and/or a speed and/or an acceleration of the belt drive section. Closed-loop control of the relative movement can be realized in this way. Preferably, for this purpose, the control unit is designed to activate the coils in such a manner that the coils are electrically energized in a manner dependent on a position and/or a speed and/or an acceleration of the belt drive section. For example, the drive system has a detection unit, with particular sensor, which is designed to detect the position and/or the speed and/or the acceleration of the belt drive section, and transmit to the control unit a pulse signal which represents the position, the speed and the acceleration of the belt drive section.

An advantageous embodiment of the drive system is characterized in that the drive apparatus is arranged so as to be positionally fixed, and the belt is mounted such that the belt drive section is movable relative to the drive apparatus. In this way, it is made possible for the belt to be able to be moved, whereas the drive apparatus remains positionally fixed. This is advantageous in particular if the belt is formed as a drive belt or as a transport belt. The belt mounting may be realized by means of diverting rollers and/or pulleys. In particular, for the drive apparatus, a positively locking or non-positively locking connection to the belt can be omitted. In other words, it is preferable for positive locking or non-positive locking to be provided between the drive apparatus and the belt. The drive apparatus preferably does not engage with the belt. Conversely, the belt is preferably not looped around the drive apparatus. Rather, the drive apparatus is preferably formed separately from the diverting rollers and/or diverting pulleys for the drive system. Provision is preferably furthermore made for the arrangement of the drive apparatus to be variable in the reference direction such that the drive apparatus can be arranged positionally fixedly at a multiplicity of positions. The respective arrangement of the drive apparatus is in particular not dependent on a position and/or arrangement of a pulley, for example of a pulley-belt drive assembly.

An advantageous embodiment of the drive system is characterized in that the belt drive section is arranged so as to be positionally fixed, and the drive apparatus is mounted so as to be movable relative to the belt drive section. In this way, it is made possible for the drive apparatus to be able to be moved, whereas the belt remains positionally fixed. The drive apparatus may be designed for coupling to a further component, which is for example to be moved linearly.

An advantageous embodiment of the drive system is characterized in that the belt is fastened with tensioning action by way of two opposite end sections to a frame of the drive system, the drive apparatus being mounted, so as to be movable in the reference direction, on the frame of the drive system. In this way, a mounted movement of the drive apparatus relative to the belt, which is fastened to the frame with tensioning action, and thus a drive apparatus for a further functional component, such as for example a robot arm, is made possible.

An advantageous embodiment of the drive system is characterized in that the drive apparatus has connection points and/or connection means which are designed for fastening for a further functional component, in particular for a robot. In this way, a further functional component, in particular a robot can be fastened to the drive apparatus. In this way, a movement of the further functional component relative to the belt can be made possible. Thus, the drive system can be used for driving the further functional component. For example, the drive apparatus may also be designed as a base for a robot arm. The connection points may be formed by bores, eyelets, stud bolts, clamping plates and/or other connections on the drive apparatus. Thus, mechanically robust connection points which are compatible with further connection points and/or further connection means of the further functional component are provided. It is alternatively or additionally possible for the drive apparatus to be assigned connection means which may serve or be required for the fastening of the functional component.

An advantageous embodiment of the drive system is characterized in that the permanent magnets are embedded in the base material of the drive belt section in parallel one behind the other and with alternating magnetic field orientation. In this way, alternating attracting and repelling magnetic forces can be utilized for the drive, whereby a particularly uniform transmission of force from the drive apparatus to the belt drive section and thus to the belt is provided.

An advantageous embodiment of the drive system is characterized in that at least one strengthening member extending in a belt circulating direction is embedded into the base material of the belt, the permanent magnets being fastened directly or indirectly to the at least one strengthening member. The belt can be mechanically reinforced by means of the strengthening members. This is advantageous in particular because, in this way, despite the absence of mechanical contact between the drive apparatus and the belt drive section, greater forces can be transmitted from the drive apparatus to the belt drive section. For example, the strengthening member may be formed from at least one cord and/or from fabric. Each cord may be formed for example from steel, aramid, carbon or polyester. Each fabric may be formed from aramid, polyester or cotton. Other embodiments for each cord or the fabric are however basically also possible. In particular, the strengthening member is designed for mechanically reinforcing the belt. Provision is thus preferably made for a transmission of force in the belt to take place at least substantially via the strengthening members. Furthermore, the permanent magnets may for example be adhesively bonded to the strengthening members. Alternatively, or in addition, the strengthening member may be woven around the permanent magnets. Further alternatively or in addition, provision may be made for the permanent magnets to be embedded into the base material. For example, the permanent magnets may be adhesively bonded in sections to the strengthening members, and/or an (in particular additional) fabric may be woven around the permanent magnets, with the permanent magnets thus being fastened to the strengthening member, and/or embedded in sections into the base material. In this way, it is (also) possible for a direct or indirect fastening of the permanent magnets to and/or in the base material to be made possible. Here, the base material is preferably formed from rubber material or polyurethane.

An advantageous embodiment of the drive system is characterized in that the drive apparatus is arranged with a predetermined spacing to the belt drive section. The predetermined spacing is preferably greater than zero. By means of the predetermined spacing, a particularly precise transmission of force to the belt drive section and thus a particularly uniform relative movement can be made possible.

An advantageous embodiment of the drive system is characterized in that the drive system has a guide apparatus which is arranged between the drive apparatus and the belt drive section and which is designed to guide the drive apparatus and the belt drive section relative to one another and/or to mount the drive apparatus and the belt drive section against one another. In this way, the spacing between the drive apparatus and the belt drive section can be predetermined in a particularly effective manner. For example, the guide device has a first guide element, which is fastened to the drive apparatus. The first guide element is preferably formed as a sliding element or as a roller. Furthermore, the guide apparatus may have a second guide element, which is fastened to the belt. This may be formed for example by a reinforcement layer on the belt.

A further embodiment of the drive system is characterized in that the drive apparatus is arranged so as not to be in contact with the belt drive section, or vice versa. In this way, a contactless drive is made possible, without mechanical contact between the drive apparatus and the belt drive section. This permits a particularly low level of wear of the belt. For example, the drive system may be designed such that no further components are arranged between the drive apparatus and the belt drive section. In this way, the drive electromagnetic field can act on the permanent magnets in a particularly effective manner.

An advantageous embodiment of the drive system is characterized in that the coils are arranged on one side relative to the belt drive section or on opposite sides of the belt, such that the coils are at least in sections arranged one behind the other in the reference direction. If the coils are arranged on one side relative to the belt drive section, a simple construction of the drive apparatus is provided. This also facilitates the positioning of the drive apparatus relative to the belt drive section, in particular in cases in which the belt is difficult to access. If the coils are arranged on opposite sides of the belt, the drive magnetic field can be generated from opposite sides of the belt. In this way, a relatively high drive force can be generated with a relatively precisely oriented magnetic field. The electromagnetic coils may for example form electromagnetic first coils and electromagnetic second coils. Here, the first coils may be arranged one behind the other in the reference direction. Furthermore, the second coils may be arranged one behind the other in the reference direction. Furthermore, the first and second coils may be arranged on in each case opposite outer sides on the belt drive section.

An advantageous embodiment of the drive system is characterized in that the belt is at least partially looped around multiple rotatable diverting means, in particular diverting rollers or pulleys, of the drive system, such that at least one load strand is formed between two of the rotatable diverting means, the belt drive section being formed by the load strand. The load strand is often subject to relatively high tensile stress, which can prevent sagging of the load strand. In this way, the drive apparatus can be arranged in a particularly precise manner relative to the load strand. Here, the drive system may be provided in addition to a further drive apparatus for driving the belt.

An advantageous embodiment of the drive system is characterized in that the belt is at least partially looped around multiple rotatable diverting means, in particular diverting rollers or pulleys, of the drive system, such that at least one return strand is formed between two of the rotatable diverting means, the belt drive section being formed by the return strand. The return strand is often subject to a low tensile stress. The arrangement of the drive apparatus at the return strand therefore does not give rise to any overloading of the belt in a tension direction. Here, the drive system may be provided in addition to a further drive apparatus for driving the belt.

Advantageous embodiments and further advantages of the invention will be discussed below in conjunction with the following figures. Further features, advantages and possible uses of the present invention will emerge from the explanations relating to the figures, and from the figures themselves. Here, all of the features described and/or illustrated in the figures form the subject matter of the invention individually and in any desired combination, even independently of the composition thereof in the individual claims, or the back-references thereof. In the figures, it is furthermore the case that the same reference designations are used for identical or similar objects.

In the figures:
- figure 1: shows a schematic illustration of a drive system according to an advantageous embodiment, in a side view,
- figure 2: shows a schematic illustration of the drive system from figure 1 on the basis of a cross-sectional view,
- figure 3: shows a schematic illustration of an enlarged section of the belt of the drive system from figure 1,
- figure 4: shows a schematic illustration of a further enlarged section of the belt and of the drive unit,
- figures 5 a) to f): show schematic illustrations of the enlarged section of the drive system in different states of electrical energization of the coils,
- figure 6: shows a schematic illustration of a drive system according to an advantageous embodiment, in a side view,
- figure 7: shows a schematic illustration of the belt on the basis of a crosssectional view, and
- figure 8: shows a schematic illustration of an advantageous embodiment of the drive system on the basis of a perspective view.

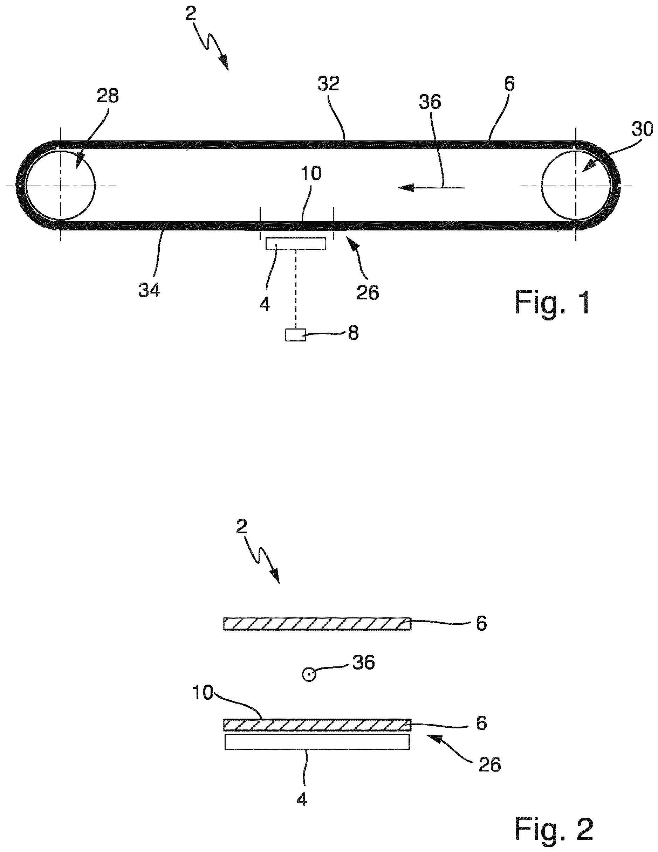

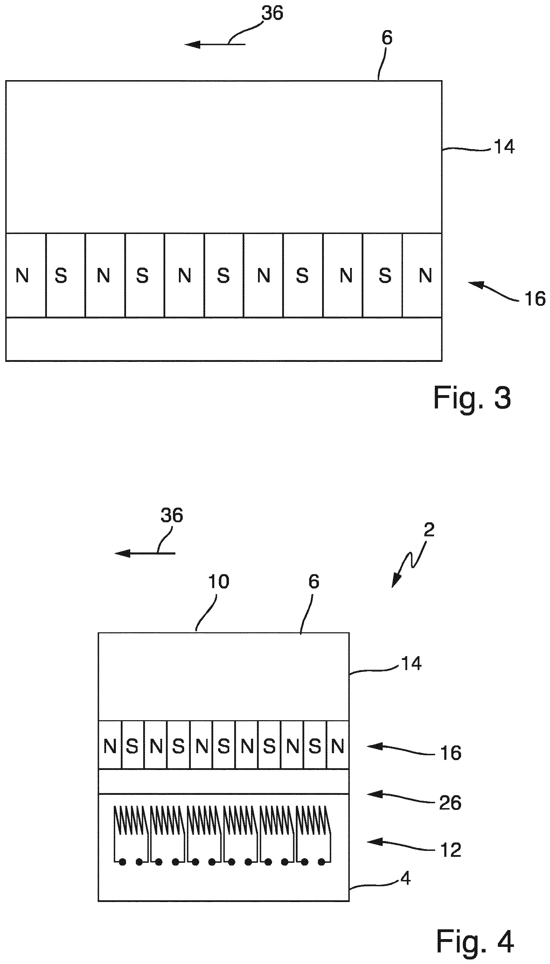

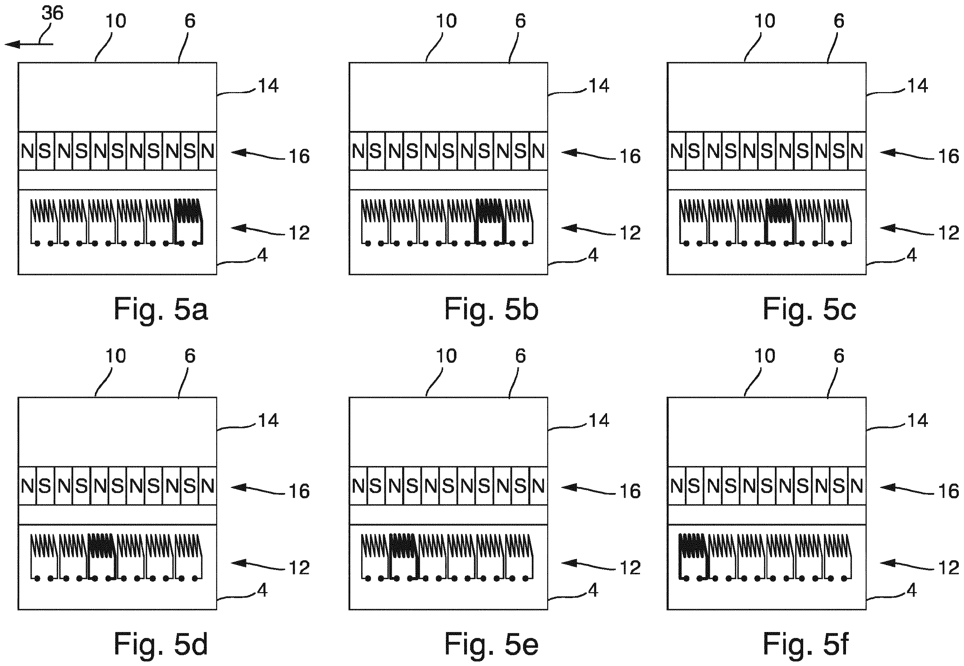

Figure 1 shows a schematic illustration of a drive system 2 according to an advantageous embodiment. The drive system 2 illustrated in figure 1 has a drive apparatus 4, a belt 6 with a belt drive section 10 and a control unit 8 for controlling the drive apparatus 4. The drive system 2 is designed to perform a linear relative movement between the drive apparatus 4 and the belt drive section 10 of the belt 6 in a reference direction 36. The drive apparatus 4 has multiple electromagnetic coils 12 (see figure 4 and figures 5a) to 5f)). The coils 12 are arranged one behind the other in the reference direction 36.

The belt 6 has a base material 14 (see figure 3, figure 4 and figures 5a) to 5f)). The base material 14 is preferably formed from rubber material or polyurethane. For example, provision may be made for at least one strengthening member which extends in a belt running direction to be embedded into the base material 14 of the belt 6.

Furthermore, the belt 6 has multiple permanent magnets 16 (see figure 3, figure 4 and figures 5a) to 5f)). The permanent magnets 16 are embedded into the base material 14 of the belt drive section 10 one behind the other in the reference direction 36. A corresponding situation may apply to the belt as a whole, such that the belt drive section 10 can be formed from different sections of the belt 6. The permanent magnets 16 may be embedded into the base material 14 of the belt drive section 10 so as to be spaced apart from one another. If the permanent magnets 16 are embedded into the base material 14 so as to be spaced apart from one another, a drive system 2 with a relatively small number of permanent magnets 16 and/or with relatively little permanent magnet material is provided. For example, the permanent magnets 16 may also be embedded into the base material 14 of the belt drive section 10 so as to adjoin one another. Here, it is preferable for each permanent magnet 16 to be embedded into the base material 14 of the belt drive section 10 such that each of the permanent magnets 16 adjoins a first adjacent permanent magnet 16 in the reference direction 36 and adjoins a second adjacent permanent magnet 16 counter to the reference direction 36. By virtue of the fact that the permanent magnets 16 can also be embedded into the base material 14 of the belt drive section 10 so as to adjoin one another, a particularly high and uniform transmission of force from the drive apparatus 4 to the belt drive section 10 can be provided. Furthermore, the permanent magnets 16 may be fastened directly or indirectly to the at least one strengthening member.

Furthermore, the control unit 8 is coupled to the coils 12 of the drive apparatus 4. This coupling is configured such that a common drive electromagnetic field can be generated by means of the coils 12. An action of the drive electromagnetic field that can be generated by the coils 12 on the permanent magnets 16 is provided by means of the arrangement of the drive apparatus 4 and of the belt drive section 10 relative to one another. The drive apparatus 4 and the belt drive section 10 are specifically arranged relative to one another such that the drive electromagnetic field that can be generated by the coils 12 acts on the permanent magnets 16. Furthermore, the control unit 8 is designed to activate the coils 12 so as to displace the drive electromagnetic field in the reference direction 36, such that a drive force which acts on the drive apparatus 4 in the reference direction 36 and a drive force which acts on the belt 6 opposite to the reference direction 36 are generated. This effects the relative movement.

The common drive electromagnetic field may result from a superposition of the individual electromagnetic fields that can be respectively generated by the coils 12. The common drive electromagnetic field may be characterized by a maximum intensity. A displacement of the (drive) electromagnetic field can thus be understood to mean a displacement of the maximum intensity. The permanent magnets 16 which are acted on by the common drive electromagnetic field orient themselves centrally with respect to the maximum intensity of the common drive electromagnetic field, if a movement of the permanent magnets 16 is possible. If the maximum intensity of the common drive electromagnetic field is now displaced, the permanent magnets 16 will move such that they follow the maximum intensity. Thus, the drive force is generated by means of the movement of the common drive electromagnetic field, in particular by means of the movement of the maximum intensity of the common drive electromagnetic field.

By virtue of the fact that the common drive electromagnetic field can be generated by means of the coils 12, which common drive electromagnetic field acts on the permanent magnets 16 and is displaceable in the reference direction 36, the relative movement between the drive apparatus 4 and the belt drive section 10 can be effected. This may occur without the need for mechanical contact between the drive apparatus 4 and the belt drive section 10 for the transmission of force from the drive apparatus 4 to the belt drive section 10. In this way, the wear of the belt drive section 10, and thus of the belt 6, and of the drive apparatus 4 is considerably reduced.

In the case of the drive system 2 illustrated in figure 1, the drive apparatus 4 and the belt drive section 10 are arranged relative to one another such that the drive electromagnetic field that can be generated by the coils 12 acts on at least two of the permanent magnets 16. Furthermore, the control unit 8 is designed to activate the coils 12. The control unit 8 is in particular designed to activate the coils 12 such that the coils 12 are electrically energized differently in the reference direction 36, such that the drive electromagnetic field is displaced in the reference direction 36. Provision is made here in particular for the coils 12 to be electrically energized in succession in the reference direction 36, such that the drive electromagnetic field is displaced in the reference direction 36.

In figure 1, the drive apparatus 4 is arranged so as to be positionally fixed. The belt 6 is mounted such that the belt drive section 10 is movable relative to the drive apparatus 4. Furthermore, the drive apparatus 4 is arranged with a predetermined spacing 26 to the belt drive section 10. By means of the predetermined spacing 26, a particularly precise transmission of force to the belt drive section 10 and thus a particularly uniform relative movement can be provided.

Provision may furthermore be made for the drive system 2 to have a guide apparatus (not illustrated) which is arranged between the drive apparatus 4 and the belt drive section 10. The guide apparatus may be designed to guide the drive apparatus 4 and the belt drive section 10 relative to one another. Alternatively or in addition, the guide apparatus may be designed to mount the drive apparatus 4 and the belt drive section 10 against one another. This is however not imperatively necessary. The drive apparatus 4 may also be arranged so as not to make contact with the belt drive section 10, and/or the belt drive section 10 may also be arranged so as not to make contact with the drive apparatus 4.

In the embodiment illustrated in figure 1, the coils 12 may be arranged on one side in relation to the belt drive section 10 (as illustrated in figure 1). This is however not imperatively necessary. The coils 12 may also be arranged on opposite sides of the belt 6, such that the coils 12 are, at least in sections, arranged one behind the other in the reference direction 36.

Furthermore, the belt 6 is at least partially looped around two rotatable diverting means 28, 30. In this way, a load strand 32 can be formed between the two rotatable diverting means 28, 30. Furthermore, a return strand 34 may be formed between the two rotatable diverting means 28, 30. A load strand 32 and a return strand 34 are formed in particular if the drive system 2 forms an auxiliary drive which is provided in addition to a main drive. Each of the diverting means 28, 30 may form in each case one diverting roller or one diverting pulley. Figure 1 illustrates that the belt drive section 10 is formed by the return strand 34. This is however not imperatively necessary. The belt drive section 10 may also be formed by the load strand 32.

Figure 2 shows a schematic illustration of the drive system 2 from figure 1 on the basis of a cross-sectional view. Figure 2 illustrates the drive apparatus 4, the belt 6, the belt drive section 10 and the predetermined spacing 26. The reference direction 36 is arranged perpendicular to the plane of the image of figure 2.

Figure 3 shows a schematic illustration of an enlarged section of the belt 6 from figure 1. Here, figure 3 shows that the permanent magnets 16 are embedded in the base material 14 of the belt drive section 10 in parallel and one behind the other. Furthermore, the permanent magnets 16 are embedded in the base material 14 of the belt drive section 10 with alternating magnetic field orientation. The alternating magnetic field orientation is schematically illustrated in figure 3 by N and S. Here, N denotes, by way of example, the north pole of the corresponding permanent magnets. S denotes, by way of example, the south pole of the corresponding permanent magnets. The permanent magnets 16 are embedded in the base material 14 with N and S alternating in the plane of the image of figure 3 in the reference direction 36.

Figure 4 shows a schematic illustration of a further enlarged section of the belt of the drive system 2 from figure 1. Figure 4 illustrates the drive apparatus 4, the belt 6, the belt drive section 10, the coils 12, the base material 14, the permanent magnets 16, the predetermined spacing 26 and the reference direction 36. Figure 4 illustrates, by way of example, six coils 12 and eleven permanent magnets 16.

Figures 5 a) to f) show schematic illustrations of the enlarged section of the drive system 2 from figure 4, in different states of electrical energization of the coils 12. Here, the control unit 8 is designed to activate the coils 12 such that the coils 12 are electrically energized in succession in the reference direction 36, such that the drive magnetic field is displaced in the reference direction. The six coils 12 have, as viewed in the reference direction 36, a first coil, a second coil, a third coil, a fourth coil, a fifth coil and a sixth coil. In figure 5 a), the first coil is electrically energized, in figure 5 b), the second coil is electrically energized, in figure 5 c), the third coil is electrically energized, in figure 5 d), the fourth coil is electrically energized, in figure 5 e), the fifth coil is electrically energized, and in figure 5 f), the sixth coil is electrical energized. The coils 12 are preferably electrically energized temporally in succession such that firstly the first, then the second, then the third, then the fourth, then the fifth and subsequently the sixth coil is electrically energized. The control unit 8 is designed to activate the coils 12 such that the coils 12 are electrically energized in succession in the reference direction, such that the drive electromagnetic field is displaced in the reference direction.

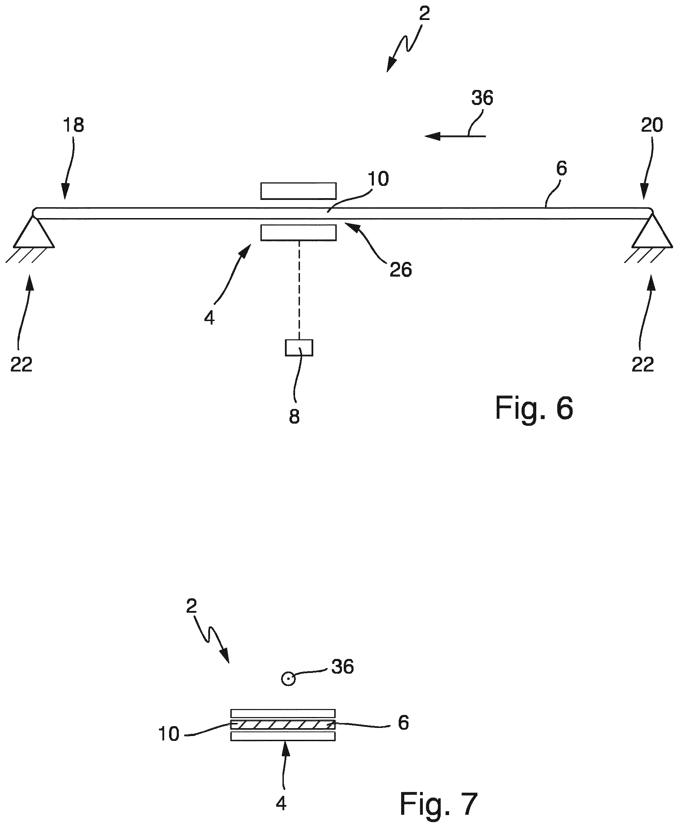

Figure 6 shows a schematic illustration of a drive system 2 according to an advantageous embodiment. In the case of the drive system 2 illustrated in figure 6, the belt drive section 10 is arranged so as to be positionally fixed. Furthermore, the drive apparatus 4 is mounted so as to be movable relative to the belt drive section 10. Furthermore, the belt 6 is fastened by way of two opposite end sections 18, 20 to a frame 22 of the drive system 2 with tensioning action. Here, the drive apparatus 4 is mounted (not illustrated) on the frame 22 of the drive system 2 so as to be movable in the reference direction 36.

In the case of the embodiment illustrated in figure 6, the coils 12 may be arranged on opposite sides of the belt 6, such that the coils 12 are, at least in sections, arranged one behind the other in the reference direction 36. This is however not imperatively necessary. The coils 12 may also be arranged on one side of the belt drive section 10.

Figure 7 shows a schematic illustration of the drive system 2 from figure 6 on the basis of a cross-sectional view. Figure 7 illustrates the drive apparatus 4, the belt 6 and the belt drive section 10. The reference direction 36 is arranged perpendicular to the plane of the image of figure 7.

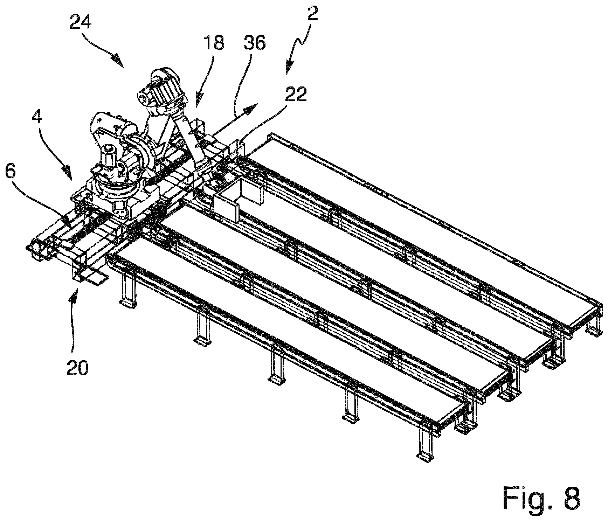

Figure 8 shows a schematic illustration of the drive system 2 from figure 6 on the basis of a perspective view. In figure 8, the drive apparatus 4 has connection points and/or connection means which are designed for fastening for a further functional component, in particular for a robot 24.

In addition it is to be noted that "having" does not exclude any other elements or steps and "a" or "an" does not exclude a plurality. In addition it is to be noted that features which have been described with reference to one of the above exemplary embodiments can also be used in combination with other features of other exemplary embodiments described above. Reference designations in the claims are not to be considered to be limiting.

### List of reference designations (part of the description)

- 2: Drive system
- 4: Drive apparatus
- 6: Belt
- 8: Control unit
- 10: Belt drive section
- 12: Coils
- 14: Base material
- 16: Permanent magnets
- 18: End section
- 20: End section
- 22: Frame
- 24: Robot
- 26: Predetermined spacing
- 28: Diverting means
- 30: Diverting means
- 32: Load strand
- 34: Return strand
- 36: Reference direction

## Claims

1. A drive system (2), having: a drive apparatus (4), a belt (6), and a control unit (8) for controlling the drive apparatus (4), the drive system (2) being designed to perform a linear relative movement between the drive apparatus (4) and a belt drive section (10) of the belt in a reference direction (36), the drive apparatus (4) having multiple electromagnetic coils (12) which are arranged one behind the other in a reference direction (36), the belt (6) having a base material (14), composed in particular of rubber material or polyurethane, the belt (6) having multiple permanent magnets (16) which are embedded into the base material (14) of the belt drive section (10) and adjacent to one another with alternating magnetic field orientation in the reference direction (36), the control unit (8) being coupled to the coils (12) of the drive apparatus (4) such that a common drive electromagnetic field can be generated by means of the coils (12), the drive apparatus (4) and the belt drive section (10) being arranged relative to one another such that the drive electromagnetic field that can be generated by the coils (12) acts on the permanent magnets (16), and the control unit (8) being designed to activate the coils (12) so as to displace the drive electromagnetic field in the reference direction (36), such that a drive force is generated which acts on the drive apparatus (4) and on the belt (6) in or opposite to the reference direction (36), thus effecting the relative movement, **characterized in that**,
the drive apparatus (4) and the belt drive section (10) are arranged relative to one another such that the drive electromagnetic field that can be generated by the coils (12) acts on at least two of the permanent magnets (16).

2. The drive system (2) as claimed in one of the preceding claims, wherein the control unit (8) is designed to activate the coils (12) such that the coils (12) are electrically energized in the reference direction, in particular in succession, such that the drive electromagnetic field is displaced in the reference direction (36).

3. The drive system (2) as claimed in one of the preceding claims, wherein the drive apparatus (4) is arranged so as to be positionally fixed, and the belt (6) is mounted such that the belt drive section (10) is movable relative to the drive apparatus (4).

4. The drive system (2) as claimed in one of the preceding claims 1 to 2, wherein the belt drive section (10) is arranged so as to be positionally fixed, and the drive apparatus (4) is mounted so as to be movable relative to the belt drive section (10).

5. The drive system (2) as claimed in claim 4, wherein the belt (6) is fastened with tensioning action by way of two opposite end sections (18, 20) to a frame (22) of the drive system (2), the drive apparatus (4) being mounted, so as to be movable in the reference direction (36), on the frame (22) of the drive system (2).

6. The drive system (2) as claimed in one of the preceding claims, wherein the drive apparatus (4) has connection points and/or connection means which are designed for fastening for a further functional component, in particular for a robot (24).

7. The drive system (2) as claimed in one of the preceding claims, wherein the permanent magnets (16) are embedded in the base material (14) of the belt drive section (10) in parallel one behind the other and with alternating magnetic field orientation.

8. The drive system (2) as claimed in one of the preceding claims, wherein at least one strengthening member extending in a belt circulating direction is embedded into the base material (14) of the belt, the permanent magnets (16) being fastened directly or indirectly to the at least one strengthening member.

9. The drive system (2) as claimed in one of the preceding claims, wherein the drive apparatus (4) is arranged with a predetermined spacing (26) to the belt drive section (10).

10. The drive system (2) as claimed in one of the preceding claims, wherein the drive system (2) has a guide apparatus which is arranged between the drive apparatus (4) and the belt drive section (10) and which is designed to guide the drive apparatus (4) and the belt drive section (10) relative to one another and/or to mount the drive apparatus (4) and the belt drive section (10) against one another.

11. The drive system (2) as claimed in one of the preceding claims 1 to 9, wherein the drive apparatus (4) is arranged so as not to be in contact with the belt drive section (10), or vice versa, or minimal contact with low friction between the drive apparatus and the belt drive section.

12. The drive system (2) as claimed in one of the preceding claims, wherein the coils (12) are arranged on one side relative to the belt drive section (10) or on opposite sides of the belt (6), such that the coils (12) are at least in sections arranged one behind the other in the reference direction.

13. The drive system (2) as claimed in one of the preceding claims, wherein the belt (6) is at least partially looped around multiple rotatable diverting means (28, 30), in particular diverting rollers or pulleys, such that at least one load strand (32) is formed between two of the rotatable diverting means (28, 30), the belt drive section (10) being formed by the load strand (32).

14. The drive system (2) as claimed in one of the preceding claims, wherein the belt (6) is at least partially looped around multiple rotatable diverting means (28, 30), in particular diverting rollers or pulleys, such that at least one return strand (34) is formed between two of the rotatable diverting means (28, 30), the belt drive section (10) being formed by the return strand (34).

## Patentansprüche

1. Antriebssystem (2), das Folgendes umfasst: eine Antriebsvorrichtung (4), einen Riemen (6) und eine Steuereinheit (8) zum Steuern der Antriebsvorrichtung (4), wobei das Antriebssystem (2) ausgelegt ist, eine geradlinige Relativbewegung zwischen der Antriebsvorrichtung (4) und einem Riemenantriebsabschnitt (10) des Riemens in einer Referenzrichtung (36) auszuführen, wobei die Antriebsvorrichtung (4) mehrere elektromagnetische Spulen (12) hat, die in einer Referenzrichtung (36) hintereinander angeordnet sind, wobei der Riemen (6) ein Basismaterial (14) hat, das insbesondere aus Gummimaterial oder Polyurethan besteht, wobei der Riemen (6) mehrere Permanentmagneten (16) hat, die in das Basismaterial (14) des Riemenantriebsabschnitts (10) und aneinander angrenzend mit abwechselnden Magnetfeldorientierungen in der Referenzrichtung (36) eingebettet sind, wobei die Steuereinheit (8) mit den Spulen (12) der Antriebsvorrichtung (4) so gekoppelt ist, dass ein gemeinsames elektromagnetisches Feld zum Antreiben mittels der Spulen (12) erzeugt werden kann, wobei die Antriebsvorrichtung (4) und der Riemenantriebsabschnitt (10) relativ zueinander so angeordnet sind, dass das elektromagnetische Feld zum Antreiben, das durch die Spulen (12) erzeugt werden kann, auf die Permanentmagneten (16) wirkt, und wobei die Steuereinheit (8) ausgelegt ist, die Spulen (12) so zu aktivieren, dass das elektromagnetische Feld zum Antreiben in der Referenzrichtung (36) verlagert wird, so dass eine Antriebskraft erzeugt wird, die auf die Antriebsvorrichtung (4) und auf den Riemen (6) in der Referenzrichtung (36) oder entgegengesetzt dazu wirkt, wodurch die Relativbewegung bewirkt wird,
**dadurch gekennzeichnet, dass** die Antriebsvorrichtung (4) und der Riemenantriebsabschnitt (10) relativ zueinander so angeordnet sind, dass das elektromagnetische Feld zum Antreiben, das durch die Spulen (12) erzeugt werden kann, auf wenigstens zwei der Permanentmagneten (16) wirkt.

2. Antriebssystem (2) nach dem vorhergehenden Anspruch, wobei die Steuereinheit (8) ausgelegt ist, die Spulen (12) so zu aktivieren, dass die Spulen (12) in der Referenzrichtung, insbesondere nacheinander, mit elektrischer Energie versorgt werden, so dass das elektromagnetische Feld zum Antreiben in der Referenzrichtung (36) verlagert wird.

3. Antriebssystem (2) nach einem der vorhergehenden Ansprüche, wobei die Antriebsvorrichtung (4) so angeordnet ist, dass sie in ihrer Position fixiert ist, und der Riemen (6) so montiert ist, dass der Riemenantriebsabschnitt (10) relativ zur Antriebsvorrichtung (4) bewegt werden kann.

4. Antriebssystem (2) nach einem der vorhergehenden Ansprüche 1 bis 2, wobei der Riemenantriebsabschnitt (10) so angeordnet ist, dass er in seiner Position fixiert ist, und die Antriebsvorrichtung (4) so montiert ist, dass sie relativ zum Riemenantriebsabschnitt (10) bewegt werden kann.

5. Antriebssystem (2) nach Anspruch 4, wobei der Riemen (6) mit einer Spannwirkung mittels zweier gegenüberliegender Endabschnitte (18, 20) an einem Rahmen (22) des Antriebssystems (2) befestigt ist, wobei die Antriebsvorrichtung (4) so am Rahmen (22) des Antriebssystems (2) montiert ist, dass sie in der Referenzrichtung (36) bewegt werden kann.

6. Antriebssystem (2) nach einem der vorhergehenden Ansprüche, wobei die Antriebsvorrichtung (4) Verbindungspunkte und/oder Verbindungsmittel hat, die für eine Befestigung für eine weitere Funktionskomponente, insbesondere für einen Roboter (24) ausgelegt sind.

7. Antriebssystem (2) nach einem der vorhergehenden Ansprüche, wobei die Permanentmagneten (16) im Basismaterial (14) des Riemenantriebsabschnitts (10) parallel oder hintereinander und mit einer abwechselnden Magnetfeldorientierung eingebettet sind.

8. Antriebssystem (2) nach einem der vorhergehenden Ansprüche, wobei wenigstens ein Verstärkungselement, das in einer Riemenumlaufrichtung verläuft, in das Basismaterial (14) des Riemens eingebettet ist, wobei die Permanentmagneten (16) direkt oder indirekt an dem wenigstens einen Verstärkungselement befestigt sind.

9. Antriebssystem (2) nach einem der vorhergehenden Ansprüche, wobei die Antriebsvorrichtung (4) mit einem zuvor festgelegten Abstand (26) zum Riemenantriebsabschnitt (10) angeordnet ist.

10. Antriebssystem (2) nach einem der vorhergehenden Ansprüche, wobei das Antriebssystem (2) eine Führungsvorrichtung hat, die zwischen der Antriebsvorrichtung (4) und dem Riemenantriebsabschnitt (10) angeordnet ist und die ausgelegt ist, die Antriebsvorrichtung (4) und den Riemenantriebsabschnitt (10) relativ zueinander zu führen und/oder die Antriebsvorrichtung (4) und den Riemenantriebsabschnitt (10) aneinander zu befestigen.

11. Antriebssystem (2) nach einem der vorhergehenden Ansprüche 1 bis 9, wobei die Antriebsvorrichtung (4) so angeordnet ist, dass sie nicht mit dem Riemenantriebsabschnitt (10) in Kontakt ist oder umgekehrt, oder dass sie in einem minimalen Kontakt mit geringer Reibung zwischen der Antriebsvorrichtung und dem Riemenantriebsabschnitt ist.

12. Antriebssystem (2) nach einem der vorhergehenden Ansprüche, wobei die Spulen (12) auf einer Seite relativ zum Riemenantriebsabschnitt (10) oder an gegenüberliegenden Seiten des Riemens (6) angeordnet sind, so dass die Spulen (12) wenigstens in Teilstücken hintereinander in der Referenzrichtung angeordnet sind.

13. Antriebssystem (2) nach einem der vorhergehenden Ansprüche, wobei der Riemen (6) wenigstens teilweise um mehrere drehbare Umlenkmittel (28, 30), insbesondere um Umlenkrollen oder Rollen gewunden ist, so dass wenigstens ein Strang (32) zwischen zwei der drehbaren Umlenkmittel (28, 30) ausgebildet ist, wobei der Riemenantriebsabschnitt (10) durch den Laststrang (32) gebildet ist.

14. Antriebssystem (2) nach einem der vorhergehenden Ansprüche, wobei der Riemen (6) wenigstens teilweise um mehrere drehbare Umlenkmittel (28, 30), insbesondere um Umlenkrollen oder Rollen gewunden ist, so dass wenigstens ein Rücklaufstrang (34) zwischen zwei der drehbaren Umlenkmittel (28, 30) ausgebildet ist, wobei der Riemenantriebsabschnitt (10) durch den Rücklaufstrang (34) gebildet ist.

## Revendications

1. Système d'entraînement (2), ayant : un appareil d'entraînement (4), une courroie (6), et une unité de commande (8) destinée à commander l'appareil d'entraînement (4), le système d'entraînement (2) étant conçu pour effectuer un mouvement relatif linéaire entre l'appareil d'entraînement (4) et une section d'entraînement de courroie (10) de la courroie dans une direction de référence (36), l'appareil d'entraînement (4) ayant de multiples bobines électromagnétiques (12) qui sont agencées les unes derrière les autres dans une direction de référence (36), la courroie (6) ayant un matériau de base (14), composé en particulier d'un matériau en caoutchouc ou d'un polyuréthane, la courroie (6) ayant de multiples aimants permanents (16) qui sont enchâssés dans le matériau de base (14) de la section d'entraînement de courroie (10) et adjacents les uns aux autres avec une orientation de champ magnétique alternée dans la direction de référence (36), l'unité de commande (8) étant couplée aux bobines (12) de l'appareil d'entraînement (4) de telle manière qu'un champ électromagnétique d'entraînement commun qui peut être généré au moyen des bobines (12), l'appareil d'entraînement (4) et la section d'entraînement de courroie (10) étant agencés l'un par rapport à l'autre de telle sorte que le champ électromagnétique d'entraînement qui peut être généré par les bobines (12) agit sur les aimants permanents (16), et l'unité de commande (8) étant conçue pour activer les bobines (12) de manière à déplacer le champ électromagnétique d'entraînement dans la direction de référence (36), de telle sorte qu'une force d'entraînement est générée qui agit sur l'appareil d'entraînement (4) et sur la courroie (6) dans la direction de référence (36) ou dans une direction opposée à celle-ci, effectuant ainsi le mouvement relatif,
**caractérisé en ce que**
l'appareil d'entraînement (4) et la section d'entraînement de courroie (10) sont agencés l'un par rapport à l'autre de telle sorte que le champ électromagnétique d'entraînement qui peut être généré par les bobines (12) agit sur au moins deux des aimants permanents (16).

2. Système d'entraînement (2) selon l'une des revendications précédentes, dans lequel l'unité de commande (8) est conçue pour activer les bobines (12) de telle sorte que les bobines (12) sont excitées électriquement dans la direction de référence, en particulier successivement, de telle sorte que le champ électromagnétique d'entraînement est déplacé dans la direction de référence (36).

3. Système d'entraînement (2) selon l'une des revendications précédentes, dans lequel l'appareil d'entraînement (4) est agencé de manière à être fixe en position, et la courroie (6) est montée de telle sorte que la section d'entraînement de courroie (10) peut être déplacée relativement à l'appareil d'entraînement (4).

4. Système d'entraînement (2) selon l'une des revendications précédentes 1 à 2, dans lequel la section d'entraînement de courroie (10) est agencée de manière à être fixe en position, et l'appareil d'entraînement (4) est monté de manière à pouvoir être déplacé relativement à la section d'entraînement de courroie (10).

5. Système d'entraînement (2) selon la revendication 4, dans lequel la courroie (6) est attachée avec une action de mise sous tension au moyen de deux sections d'extrémité opposées (18, 20) à un châssis (22) du système d'entraînement (2), l'appareil d'entraînement (4) étant monté de manière à pouvoir être déplacé dans la direction de référence (36), sur le châssis (22) du système d'entraînement (2).

6. Système d'entraînement (2) selon l'une des revendications précédentes, dans lequel l'appareil d'entraînement (4) a des points de connexion et/ou un moyen de connexion qui sont conçus pour une attache d'un composant fonctionnel supplémentaire, en particulier pour un robot (24).

7. Système d'entraînement (2) selon l'une des revendications précédentes, dans lequel les aimants permanents (16) sont enchâssés dans le matériau de base (14) de la section d'entraînement de courroie (10) en parallèle les uns derrière les autres et avec une orientation de champ magnétique alternée.

8. Système d'entraînement (2) selon l'une des revendications précédentes, dans lequel au moins un élément de renforcement s'étendant dans une direction de circulation de courroie est enchâssé dans le matériau de base (14) de la courroie, les aimants permanents (16) étant attachés directement ou indirectement audit au moins un élément de renforcement.

9. Système d'entraînement (2) selon l'une des revendications précédentes, dans lequel l'appareil d'entraînement (4) est agencé avec un espace prédéterminé (26) par rapport à la section d'entraînement de courroie (10).

10. Système d'entraînement (2) selon l'une des revendications précédentes, dans lequel le système d'entraînement (2) a un appareil de guidage qui est agencé entre l'appareil d'entraînement (4) et la section d'entraînement de courroie (10) et qui est conçue pour guider l'appareil d'entraînement (4) et la section d'entraînement de courroie (10) l'un par rapport à l'autre et/ou pour monter l'appareil d'entraînement (4) et la section d'entraînement de courroie (10) à l'encontre l'un de l'autre.

11. Système d'entraînement (2) selon l'une des revendications précédentes 1 à 9, dans lequel l'appareil d'entraînement (4) est agencé de manière à ne pas être en contact avec la section d'entraînement de courroie (10), ou vice versa, ou en contact minimal avec une faible friction entre l'appareil d'entraînement et la section d'entraînement de courroie.

12. Système d'entraînement (2) selon l'une des revendications précédentes, dans lequel les bobines (12) sont agencées sur un côté relativement à la section d'entraînement de courroie (10) ou sur des côtés opposés de la courroie (6), telle sorte que les bobines (12) sont au moins dans des sections agencées les unes derrière les autres dans la direction de référence.

13. Système d'entraînement (2) selon l'une des revendications précédentes, dans lequel la courroie (6) est au moins partiellement enroulée autour de multiples moyens de déviation rotatifs (28, 30), en particulier des rouleaux ou poulies de déviation, de telle sorte qu'au moins un brin de charge (32) est formé entre deux des moyens de déviation rotatifs (28, 30), la section d'entraînement de courroie (10) étant formée par le brin de charge (32).

14. Système d'entraînement (2) selon l'une des revendications précédentes, dans lequel la courroie (6) est au moins partiellement enroulée autour de multiples moyens de déviation rotatifs (28, 30), en particulier des rouleaux ou poulies de déviation, de telle sorte qu'au moins un brin de charge (34) est formé entre deux des moyens de déviation rotatifs (28, 30), la section d'entraînement de courroie (10) étant formée par le brin de retour (34).
